# EUROPEAN PATENT APPLICATION

(11) **EP 1 061 405 A2**
(43) Date of publication of application: **20.12.2000**
(21) Application number: 00830425.5
(22) Date of filing: 16.06.2000
(51) Int. Cl.: G02F 1/15, G02F 1/163

(54) **Micro-galvanic optical device**

(30) Priority: 16.06.1999 IT TO990517
(71) Applicant: C.R.F. Societa' Consortile per Azioni, 10043 Orbassano (Torino) (IT)
(72) Inventor: Lambertini, Vito, 10049 Giaveno (Torino) (IT); Repetto, Piermario, 10145 Torino (IT); Sinesi, Sabino, 10045 Piossasco (Torino) (IT)
(74) Representative: Notaro, Giancarlo

(57) **Abstract**

An optical device, usable in a wide range of applications, for example as electronic display or as optical micro-shutter, or else as variable-reflectance micro-mirror, exploits a distribution of galvanic micro-cells, each of which is designed to change optical state by means of control of the electrochemical deposition of a metal on one of its walls.

## Description

The present invention relates to optical devices of various types, such as electronically controlled optical displays, optical shutters, or variable-reflectance mirrors.

In particular, in the field of electronic displays the need is felt for devices that conserve the same advantageous characteristics as liquid-crystal displays (with particular reference to the reduced overall dimensions of the latter) and that, at the same time, are substantially superior from the standpoint of the sharpness of the image displayed. In the case of liquid-crystal displays, for example, the image displayed is clearly visible only within a relatively reduced angular field of view. From the standpoint of sharpness of the image, the best type of display is still today the printed page. The ideal solution would therefore be to produce an electronically controllable display that is able to create images having the same quality as the printed page, which can be read from any angle of view. Some recent research in the field of the so-called "electronic inks" has moved in this direction, without, however, reaching so far a solution that may be implemented in practice.

The purpose of the present invention is to provide a new type of optical device that is able to meet the above requirements.

With a view to achieving the aforesaid purpose, the subject of the present invention is an optical device characterized in that it comprises at least one electrolytic micro-cell including an electrolytic bath and two electrodes, with one wall that is at least partially transparent and constitutes one of said electrodes, said device moreover comprising means for controlling supply of electric voltage to said electrodes in such a way as to vary the optical state of said micro-cell by controlling the electrolytic deposition of metal on said wall.

Thanks to the above characteristics, the optical device according to the invention is advantageously suitable for a wide range of applications. For example, it is possible to produce an electronic display by providing a matrix of electrolytic micro-cells of the type specified above, which thus come to constitute the pixels of the display, each micro-cell being switchable at least between two stable states. For example, the micro-cell may be arranged in such a way that in one of said states it appears white, whilst in the other of said states it appears coloured, for example black. By controlling voltage supply to the various micro-cells it is thus possible to obtain display of any image with a degree of sharpness comparable with that of a sheet of printed paper.

In a preferred embodiment, the electrodes of each micro-cell consist of the aforesaid at least partially transparent wall and of a second wall facing the former wall, with an electrolytic bath set between said first wall and said second wall. As already indicated, the micro-cell is switched at least between two stable conditions, one of which corresponds to the deposition of metal on said first wall. In one variant, however, the micro-cell can assume at least one further stable operating condition, which is intermediate between the two aforesaid stable conditions and corresponds to only partial deposition of metal on said first wall. Also an adjustable continuous control of the optical state of the micro-cell between the two aforesaid extreme conditions may be envisaged.

In a first possible application, the aforesaid first wall is a diffusing wall, and the electrolytic bath is coloured (for example, by means of pigments) in such a way that, in a first stable condition, corresponding to the deposition of metal on said first wall, the latter appears white, when viewed from outside, whilst in a second stable condition, corresponding to the deposition of metal on the aforementioned second wall, the first wall, viewed from outside, appears to have the same colour as the electrolytic bath.

In a second application, the aforesaid first wall is a diffusing wall, and the second wall is coloured, in such a way that in a first stable condition, corresponding to the deposition of metal on said first wall, the latter appears white, when viewed from outside, whereas in a second stable condition, in which the metal is dispersed in the solution, the first wall, viewed from outside, appears to have the same colour as the second wall, the electrolytic solution being transparent.

The aforesaid first wall and the aforesaid second wall acting as electrodes are made of a film of transparent electrically conductive material, for example indium tin oxide (ITO). The electrolytic solution may be of various types. The present applicant has, for example, carried out experiments using a nickel-sulphamate bath. The total thickness of the micro-cell may be from 5 to 300 µm and over.

The use of ITO for the walls working as electrodes makes it possible to obtain, if so desired, a display consisting of a relatively thin and flexible sheeting, which is thus able to adapt to a substrate of any shape, thereby further increasing the versatility of the device according to the invention.

The device can also be used to produce an optical shutter or a variable-reflectance mirror, for example usable as rear-view mirror inside a motor vehicle with anti-dazzle characteristics. In the case of application as shutter, the first wall and second wall are smooth and transparent, and also the electrolytic solution is transparent, in such a way that in a first stable condition, corresponding to the deposition of metal on the first wall, the device prevents the passage of light, whereas in a second stable condition, in which the metal is dispersed in the solution, the device enables passage of the light.

In the application as anti-dazzle mirror, the second wall is a reflecting wall, in such a way that in a first stable condition, corresponding to the deposition of metal on the first wall, the device uses said first wall as reflecting surface, whilst in a second stable condition, in which the metal is dispersed in the solution, the device uses said second wall as reflecting surface.

Of course, the possible applications of the device according to the invention are innumerable, and the applications referred to above have been described purely to provide examples.

Further characteristics and advantages of the present invention will emerge from the ensuing description, with reference to the attached drawings, which are provided purely to furnish non-limiting examples, and in which:
Figures 1 and 2 illustrate one first embodiment of a galvanic micro-cell according to the present invention, in two different operating conditions;
Figures 3 and 4 illustrate a second embodiment in two different operating conditions;
Figures 5 and 6 illustrate a third embodiment in two different operating conditions; and
Figure 7 is a schematic illustration of a display according to the invention.

In the drawings, the reference number 1 designates, as a whole, a galvanic micro-cell according to the invention, usable for producing a plurality of optical devices of various types. In the case illustrated, the application is that of a display of the type illustrated schematically in Figure 7, comprising a matrix of galvanic micro-cells 1, each of which is designed to constitute a pixel of the image display, under the control of an electronic control unit 1a.

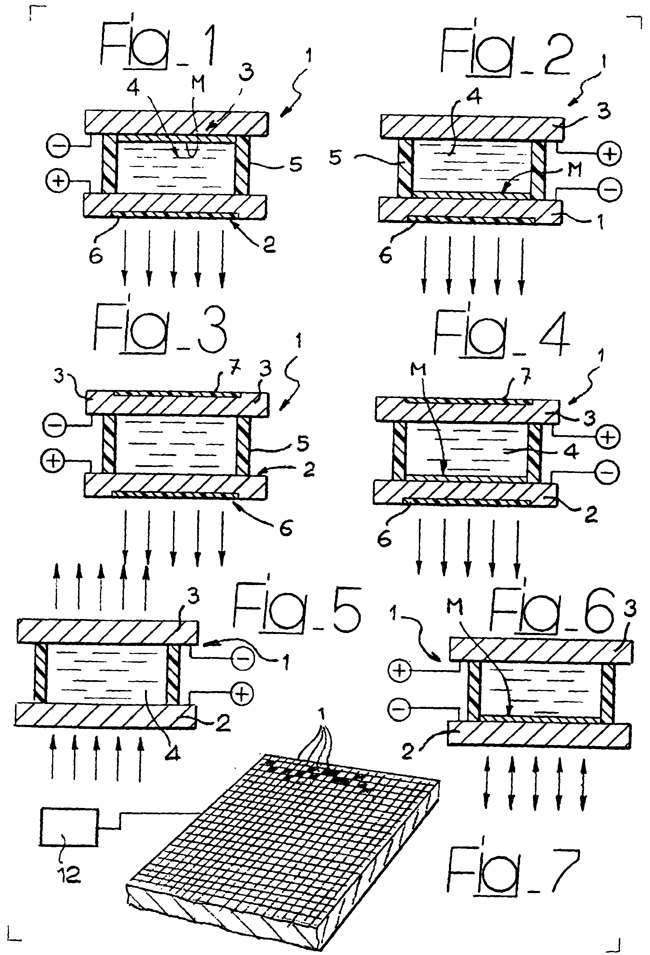

With reference to Figure 1, the galvanic micro-cell 1 comprises two electrodes 2, 3 in the form of plane plates or films, which are parallel to one another and set at a distance apart from one another, and between which is set a chamber 4 delimited laterally by a wall 5. Set inside the chamber 4 is an electrolytic solution containing the ions of the metal necessary for obtaining the result that forms the subject of the invention. In one example, the applicant carried out a test using a nickel-sulphamate solution with the following components and corresponding concentrations:
- nickel sulphamate: 80 g/l
- nickel chloride: 10 g/l
- boric acid: 35 g/l
- pH: 4.2

The thickness of the micro-cell 1 may be between 5 and 300 µm or over.

In the case illustrated in Figures 1 and 2, the wall or film 2 constituting the first electrode is made of an electrically conductive and transparent material, for example ITO, and is made to diffuse by application of a diffusing film 6 having a satiny surface. In this case, the electrolytic solution is rendered opaque by using suitable pigments which to not interfere with the deposition of metal that takes place when voltage is applied to the electrodes. Figure 1 illustrates the micro-cell in a first stable condition, in which the metal deposits on the second wall 3, so that the first wall 2, viewed from outside, appears to have the same colour as the electrolytic solution. When an electric voltage is applied to the electrodes 2, 3 with reverse polarities with respect to what is illustrated in Figure 1, electrolytic deposition of metal is obtained on the wall 2 (Figure 2) whereby the colour of the electrolytic solution is no longer visible from outside, and the wall 2, viewed from outside, appears white. Of course the colour with which the electrolytic solution is coloured may be any whatsoever, for example even black. The two conditions illustrated consequently correspond to black colouring and white colouring of the wall 2, as viewed from outside. It is important to note that both conditions are stable conditions; i.e., they persist even after the interruption of electric voltage. In other words, once the electric voltage applied to the electrodes has caused deposition of metal on one of the walls 2, 3, the electrical supply can be interrupted, in so far as the condition thus reached is a stable condition.

On the basis of the structure illustrated in Figures 1 and 2 it is therefore conceivable to produce a display of the type illustrated in Figure 7, on which any type of image may be displayed, including a written text, by controlling electrical supply to the various micro-cells constituting the pixels of the display. Furthermore, the materials used are suitable for the creation of structures that are also flexible and of extremely reduced thicknesses, with consequent increase in the versatility of the device and in the number of its possible applications.

It is also important to note that the system may be programmed to obtain also one or more conditions that are intermediate between the two operating conditions described above and correspond to an only partial deposition of the metal on one of the walls. One of the important advantages of the system according to the invention is that also any intermediate condition is a stable condition; i.e., it is a condition that persists even after interruption of electrical supply.

Figures 3 and 4 illustrate the two stable operating conditions of a second embodiment of the micro-cell according to the invention, in which the first wall 2 is again transparent and is provided with a diffusing film 6, and the second wall is also transparent and is provided with a coloured film 7. In this case, the electrolytic solution is transparent. In the condition illustrated in Figure 3, the metal is dispersed in the solution, so that the wall 2, viewed from outside, appears to have the same colour as the film 7. Instead, in the condition illustrated in Figure 4, a layer of metal M has deposited on the first wall 2, so that the wall 2, viewed from outside, appears white. The transparency of the electrolytic solution is obtained by calculating the concentration of metal ions using Nernst's equation. In the condition of Figure 4, the wall 2 appears white, viewed from outside, as soon as the metal deposited M reaches a thickness of 60-100 nm. During the deposition step, the liquid, subjected to a field of 1-5 V, causes impoverishment in metal ions with formation of the opaque film. As has already been said, when the polarity is instead reversed there is a dissolution of the metal film, and the conditions of transparency are restored. This can be obtained by appropriately choosing the metal, because in these conditions there is a metal anode and an ITO cathode, the efficiency of deposition of which is lower than that of the anode. In order to favour this phenomenon it is possible to use conductive films and ITO having different resistivities.

Also in the case of the embodiment illustrated in Figures 5 and 6, the electrolytic solution must be transparent and have a concentration of metal ions calculated by means Nernst's equation. During the deposition of metal M, the surface of the wall 2 changes transmittance until it becomes completely reflecting once it has reached a thickness of 60-100 nm. In this case, a diffusing film 6 is not envisaged, and the surface of the wall 2 is a smooth surface. During the step of deposition of metal M, the liquid, subjected to a field of 1-5 V, causes impoverishment in metal ions with formation of the reflecting film. As in the case of Figures 3 and 4, when the polarity is reversed there is a dissolution of the metal film, and the conditions of transparency are restored. Also in this case, an appropriate choice of the metal and of the conductive films enables different electrode efficiencies to be obtained, with the result that the solution is enriched without deposition of metal. A device is thus obtained which, in the condition illustrated in Figure 5, allows a beam of light to pass through it, whilst in the condition illustrated in Figure 6, it reflects the beam. By controlling the times of deposition of metal M, of course it is possible to control the reflectance of the film 2.

A further application could, for example, be envisaged in which the second wall 3 is provided at the rear with a black layer that renders it reflecting. In this way, in a condition corresponding to the dispersion of the metal in the solution, the device reflects by means of the surface of the rear wall 3, whilst in the condition corresponding to the one illustrated in Figure 6 the device reflects by means of the surface of the front wall 2. A device of this sort is, for example, usable in a rear-view mirror inside a motor vehicle, in order to obtain a anti-dazzle characteristic.

It is evident in any case that the applications of the device according to the invention are innumerable.

It is likewise evident from the foregoing description that the principle of operation on which the device according to the invention is based is that of electrochemical deposition of a metal. Metal deposition on a surface obtained in the ways described above makes it possible to achieve sufficient contrast for applications in the field of non-emissive displays having very reduced thicknesses. As has also been described, the techniques for obtaining the contrast may be different according to the types of treatment performed on the surfaces of the walls, or conductive films, and on the electrolyte. According to the cases, pigments may be added to the solution to obtain the contrast.

The possibility of arranging the device so as to assume stable conditions that are intermediate between the two opposite operating conditions opens up a wide range of possibilities for further applications.

Of course, without prejudice to the principle of the invention, the details of construction and the embodiments may vary widely with respect to what is described and illustrated herein purely for the purpose of providing examples, without thereby departing from the scope of the present invention.

## Claims

1. An optical device characterized in that it comprises at least one electrolytic micro-cell (1) including an electrolytic bath and two electrodes (2, 3), with one wall (2) that is at least partially transparent and constitutes one of said electrodes, said device moreover comprising means for controlling supply of electric voltage to said electrodes (2, 3) in such a way as to vary the optical state of said micro-cell by controlling the electrolytic deposition of metal on said wall (2) .

2. An optical device according to Claim 1, characterized in that the electrodes of said micro-cell consist of the aforesaid at least partially transparent wall (2) and of a second wall (3) set facing it, the electrolytic bath being set between said first wall (2) and said second wall (3).

3. An optical device according to Claim 2, characterized in that said micro-cell is switcheable between two stable conditions, one of which corresponds to the deposition of metal on said first wall (2).

4. An optical device according to Claim 3, characterized in that said micro-cell (1) can assume at least one further stable operating condition, which is intermediate between the aforesaid two stable conditions and corresponds to only partial deposition of metal on said first wall (2).

5. An optical device according to Claim 3, characterized in that said first wall (2) is a diffusing wall, and the electrolytic bath is coloured in such a way that, in a first stable operating condition, corresponding to the deposition of metal on said first wall (2), the latter appears white, when viewed from outside, whilst in a second stable operating condition, corresponding to the deposition of metal (M) on the second wall (3), said first wall (2), viewed from outside, appears to have the same colour as the electrolytic bath.

6. An optical device according to Claim 3, characterized in that said first wall (2) is a diffusing wall, and said second wall (3) is coloured, in such a way that in a first stable operating condition, in which said metal (M) is electrolytically deposited on said first wall (2), the latter appears white, when viewed from outside, whereas in a second stable operating condition the metal is dispersed in the solution, so that the aforesaid first wall (2), viewed from outside, appears to have the same colour as the second wall (3), the electrolytic solution being substantially transparent.

7. An optical device according to Claim 3, characterized in that said first wall (2) is a smooth wall, and said second wall (3) is also a transparent wall, in such a way that in a first stable operating condition, in which the metal (M) is electrolytically deposited on said first wall (2), the latter functions as a reflecting wall, whereas in a second stable operating condition, in which the metal is dispersed in the solution, said device can be traversed by a beam of light, the electrolytic solution being substantially transparent.

8. An optical device according to Claim 3, characterized in that said first wall (2) is a smooth wall, and said second wall (3) is a reflecting wall, in such a way that in a first stable operating condition, in which a layer of metal (M) is electrolytically deposited on said first wall (2), the latter functions as a reflecting wall, whilst in a second stable operating condition, in which the metal is dispersed in the solution, it is said second wall (3) that functions as a reflecting wall.

9. An optical device according to Claim 3, characterized in that said first wall (2) consists of an ITO film.

10. An optical device according to Claim 3, characterized in that the electrolytic bath is a nickel-sulphamate solution.

11. An optical device according to Claim 1, characterized in that the aforesaid micro-cell (1) has an overall thickness of between 5 µm and 300 µm and over.

12. An optical device characterized in that it comprises a matrix of galvanic micro-cells according to any of the previous claims.
